Europäisches Patentamt

**European Patent Office**

**Office européen des brevets**

(11) Veröffentlichungsnummer: **0 139 823**
**B1**

(12) **EUROPÄISCHE PATENTSCHRIFT**

(45) Veröffentlichungstag der Patentschrift:
18.05.88

(21) Anmeldenummer: 84105688.0

(22) Anmeldetag: 18.05.84

(51) Int. Cl.⁴: **F 16 L 55/02,** F 16 L 27/10

(54) Schallisolierender Metallbalgkompensator.

(30) Priorität: 03.11.83 DE 3339762

(43) Veröffentlichungstag der Anmeldung:
08.05.85 Patentblatt 85/19

(45) Bekanntmachung des Hinweises auf die Patenterteilung:
18.05.88 Patentblatt 88/20

(84) Benannte Vertragsstaaten:
CH DE FR GB IT LI

(56) Entgegenhaltungen:
CH-A-615 261
DE-A-2 509 062
FR-A-721 497
FR-A-1 499 461

(73) Patentinhaber: **Rudolf Stender KG (GmbH & Co),**
**Robert- Koch- Strasse 17, D-2000 Norderstedt (DE)**

(72) Erfinder: **Stender, Rudolf, Robert- Koch- Strasse**
**17, D-2000 Norderstedt 2 (DE)**

(74) Vertreter: **Schöning, Hans- Werner, Dipl.- Ing.,**
**RECHTSANWÄLTE Dr. Harmsen, Dr. Utescher**
**Dipl.- Chem Harmsen, Bartholatus Dr. Schaeffer,**
**Dr. Fricke PATENTANWÄLTE Dr. Siewers, Dipl.-**
**Ing. Schöning Adenauerallee 28, D-2000 Hamburg**
**1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 139 823 B1

## Beschreibung

Die Erfindung betrifft einen schallisolierenden Metallbalgkompensator, bestehend aus einem gewellten Metallbalg, dessen nach außen radial zu einem Ringscheibenteil aufgeweitete Enden ohne metallischen Kontakt mit Befestigungsflanschen verbunden sind.

Sofern nicht im Betrieb relativ hohe Temperaturen auftreten, verwendet man im allgemeinen Rohrkompensatoren mit einem armierten Gummibalg, der mit Rohrbefestigungsteilen, insbesondere Flanschringen verbunden ist. Gummibalgkompensatoren zeichnen sich durch eine elektrische Isolierfähigkeit und auch durch eine sehr gute Geräuschabsorbierung, d.h. durch eine Dämpfung hochfrequenter Schwingen, aus. Ihr Nachteil liegt jedoch darin, daß sie temperaturmäßig nicht übermäßig belastet werden dürfen. Wenn in der Praxis Dauertemperaturen über 110°C zu erwarten sind, muß der Techniker Zuflucht nehmen zu Stahlbalgkompensatoren, die die erwünschte elektrische Isolierfähigkeit und Dämpfung hochfrequenter mechanischer Schwingungen nur in beschränktem Umfange bewirken können, wenn man keine nichtmetallischen Zwischenlagen verwendet. Hinzu kommt auch noch, daß die bisher bekanntgewordenen Isolierkompensatoren eine erheblich verminderte Lebensdauer haben, da die zwischen dem metallischen Befestigungsflansch und Metallbalg vorgesehenen nichtmetallischen Isolierstücke starken mechanischen Beanspruchungen ausgesetzt sind und dann zerstört oder bei Überdruck herausgetrieben werden können.

In der Haustechnik, zum Beispiel in Heizungsanlagen, Fernwärmeversorgungen, aber auch in der Industrie gibt es Betriebsbedingungen, wo Eigenschaften verlangt werden, die einerseits Gummikompensatoren und andererseits Stahlrohr-Kompensatoren, wie sie beispielsweise aus der CH-A-615 261 bekannt sind, zu eigen sind. So werden beispielsweise in Übergabestationen von Fernheizanlagen Kompensatoren gefordert, die Bewegungen aufnehmen, Temperaturen von 130° bis 150°C über lange Zeiträume widerstehen und zugleich ausgezeichnete Dämpfungseigenschaften gegen hochfrequente Schwingungen haben, also Geräuschfortleitungen weitgehend unterbrechen.

Es ist Aufgabe der vorliegenden Erfindung, eine Verbesserung der Metallbalgkompensatoren der eingangs genannten Art im Hinblick auf die Eigenschaften zu schaffen, die bisher nur Gummi-Kompensatoren zu eigen sind.

Gelöst wird die Aufgabe gemäß der Erfindung dadurch, daß mindestens einer der Befestigungsflansche aus schallabsorbierendem, nichtmetallischem Werkstoff besteht, daß am inneren Umfang des Befestigungsflansches der radial gerichtete Ringscheibenteil des Balges einvulkanisiert und an der der Balgmitte zugewandten Seite mit einem nichtmetallischen Ring abgedeckt ist und daß die der Kompensatormitte zugewandte Seite des Befestigungsflansches mit einem übergreifenden, hutförmig profilierten Armierungsring aus Stahlblech abgedeckt ist, dessen Innenöffnung die Balgmantelfläche mit Abstand umgibt.

Der Vorteil eines derart ausgebildeten Metallbalgkompensators liegt im wesentlichen darin, daß, wie angestrebt, dieser sowohl hohen Temperaturen über lange Zeiträume widerstehen kann und ausgezeichnete Dämpfungseigenschaften gegen hochfrequente Schwingungen aufweist.

Der Vorteil des Verfahrens zum Herstellen dieser Kompensatoren, bei dem auf die zylindrischen Enden eines gewellten Metallrohres Isolierbandagen aus Gummi aufgebracht und darüber metallische Armierungsringe aufgeschoben, daß die überstehenden gummibelegten Rohrteile durch Verdrängungsverformung zu Ringscheibenteilen umgebördelt und mit aus Gummi bestehenden Befestigungsflanschen abgedeckt werden und daß anschließend die Ringscheibenteile in einer Vulkanisierform zum Pressen und Verfließen fest in das ausvulkanisierte Gummi eingebettet werden, besteht darin, daß zur Ausführung dieses Verfahrens herkömmliche Verfahrensschritte, wie sie bei der Herstellung von Kompensatoren verwendet wurden, kombiniert werden, und deshalb aufwendige gesonderte Verfahrensschritte entbehrlich sind.

Nachfolgend werden anhand der beigefügten Zeichnungen bevorzugte Ausführungsformen des erfindungsgemäßen Metallbalgkompensators näher erläutert. In den Zeichnungen zeigen:

Fig. 1 einen Diametralschnitt durch einen erfindungsgemäßen schallisolierenden Stahlbalgkompensator und

Fig. 2 eine der Fig. 1 ähnliche Darstellung eines Stahlbalgkompensators mit Längenbegrenzung.

Der erfindungsgemäße Kompensator besteht aus einem gewellten Metallbalg 10, der an seinen beiden Enden mit aus nicht-metallischem Werkstoff bestehenden Befestigungsflanschen 20 versehen ist, die mit einem hutförmig profilierten Armierungsring 40 aus Stahlblech hinterlegt sind. Für die Schallisolierung ist maßgebend, daß die an den Befestigungsflanschen 20, bzw. an den Armierungsringen 40 angreifenden Befestigungsschraubbolzen keinen metallischen Kontakt mit dem Metallbalg 10 erhalten können. Obwohl der erfindungsgemäße Metallbalgkompensator in aller Regel symmetrisch ausgebildet wird, kann es unter gewissen Umständen durchaus von Nutzen sein, die erfindungsgemäße Konstruktion nur an einem Balgende vorzusehen, während das andere Ende des Kompensators unterschiedlich ausgebildet und möglicherweise auch nicht schallisolierend ist.

Der vorzugsweise aus Edelstahl bestehende Metallbalg 10 ist an seinen Enden neben kurzen zylindrischen Abschnitten 11 radial nach außen umgebördelt, um einen Ringscheibenteil 12 zu bilden.

Der erwähnte Ringscheibenteil 12 ist in den aus nicht-metallischem Werkstoff, vorzugsweise aus Gummi oder dergl. hergestellten Befestigungsflansch 20 eingebettet und einvulkanisiert. Aus fertigungstechnischen Gründen sind die Außenenden des Metallbalges 10 an der Außenseite mit einem aus nicht-metallischem Werkstoff, beispielsweise aus Gummi bestehenden, L-förmig profilierten Ringkörper 30 abgedeckt. Der sich im wesentlichen radial nach außen erstreckende Ringteil 31 bedeckt den radial gerichteten Ringscheibenteil 12 und der Ringteil 32 den zylindrischen Endteil des Kompensatorbalges 10. Innerhalb des Teilkreises in dem sich die Bohrungen 21 für die Befestigungsbolzen befinden, ist am Befestigungsflansch 20 ein Dichtungsring 22 ausgeformt.

Die Muttern oder Schraubenköpfe der an den Befestigungsflanschen 20 angreifenden Befestigungsbolzen stützen sich an dem der Balgmitte zugewandten Armierungsringen 40 ab, die in Übereinstimmungen mit den Bohrungen 21 Öffnungen für den Durchtritt der Befestigungsschrauben aufweisen. Der innengelegene und sich im wesentlichen radial erstreckende Teil 42 des Armierungsringes 40 verläuft etwa parallel zum radialen Abschmitt 31 des nicht-metallischen Ringkörpers 30, zum Ringscheibenteil 12 des Kompensatorbalges 10 und zum Dichtungsring 22, so daß bei fertiger Montage die sandwichartig aufeinander liegenden Teile zwischen dem Armierungsringteil 42 und dem Gegenflansch der anzuschließenden Rohrleitung eingespannt werden können. Zu beachten ist, daß der innere Umfang 43 des Stahlblechringes 40 größer ist als der zylindrische Abschnitt 11 des Kompensatorbalges 10, damit es zu keiner metallischen Berührung zwischen den Befestigungsmitteln und dem Stahlbalg kommen kann. Vorzugsweise stimmt der Innendurchmesser des Stahlblechringes 40 mit dem Außenumfang des nicht-metallischen Ringkörpers 30 im Bereich 32 überein.

Der Aufbau des erfindungsgemäßen Kompensators geschieht vorzugsweise wie folgt. Über die zylindrischen Enden eines zunächst noch nicht mit radialen Ringscheibenteilen versehenen Metallbalges wird eine schlauchartig ausgebildete Isolierbandage aus Gummi aufgebracht, die später den L-profilierten Ringkörper 30 bildet. Anschließend wird ein aus Stahlblech gezogener oder aus Stahl geschmiedeter oder gedrehter profilierter Armierungsring 40 über die zylindrischen Enden 11 des Kompensatorbalges 10 gezogen. Die überstehenden Enden dieses Verbundes aus Gummi und Edelstahl werden in bekannter Weise durch Verdrängungsumformumgebördelt. Der soweit fertiggestellte Kompensator wird dann an beiden Seiten mit dem aus Gummi bestehenden Befestigungsflansch 20 abgedeckt, wobei der Armierungsring 40 die Festigkeit des Gummi-Befestigungsflansches erhöht und auch dessen Vulkanisation erleichtert. Die aus Gummi bestehenden Befestigungsflanschen 20 und Ringkörper 30 werden vorzugsweise unter Verwendung eines aufgestrichenen Haftvermittlers auf die Metallteile heiß aufvulkanisiert. Hierbei wird der Ringscheibenteil 12 des Kompensatorbalges durch Pressen und Verfließen fest in das ausvulkanisierte Gummi eingebettet.

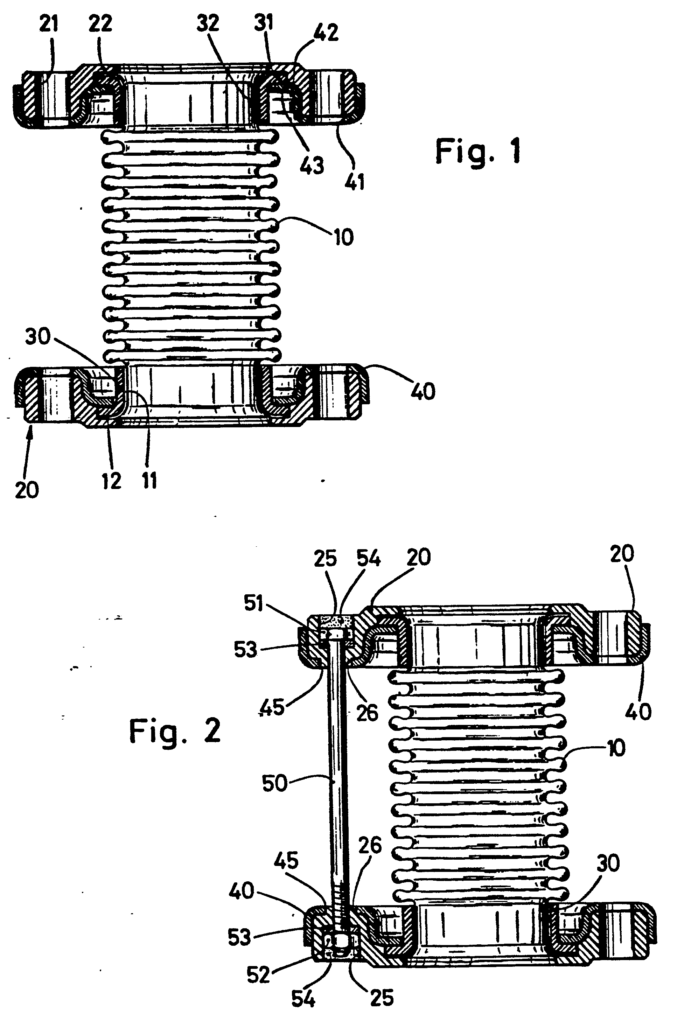

Kompensatoren unter Druckbelastung verursachen eine Reaktionskraft, die aus Betriebsinnendruck und Balgquerschnittsfläche resultiert. Bei fehlenden Festpunkten in Rohrleitungen oder aber um zum Beispiel Pumpengehäuse von Reaktionskräften zu entlasten, werden Kompensatoren mit sogenannten Verspannungen oder Längenbegrenzern ausgerüstet, die eine Streckung des Kompensators unter Innendruckbelastung verhindern, aber laterale Bewegungen zulassen. Um die dämpfende bzw. isolierende Eigenschaft des erfindungsgemäßen kompensators zu erhalten, müssen die Längenbegrenzer ebenfalls isoliert angebracht werden. Wie dies im einzelnen geschieht, zeigt die Fig. 2. Der Kompensator gemäß Fig. 2 ist im wesentlichen genauso ausgebildet wie der Kompensator der Fig. 1. Es sind lediglich am Umfang der Befestigungsflanschen zwischen den Bohrungen 21/41 ein oder mehrere Zugstangen 50 angeordnet. Der Kopf 51 bzw. die Gewindemutter 52 der Zugstange 50 liegen in Sacklochbohrungen 25 des vorzugsweise aus Gummi bestehenden Befestigungsflansches 20. Die Zugstange 50 ist durch den Flansch 20 und den Stahlblechring 40 hindurchgeführt. Um Berührungen zwischen der Zugstange 50 und dem Stahlblechring 40 zu verhindern, ist in dem letzteren eine mit Übermaß hergestellte Bohrung 45 vorgesehen, in die ein ringförmiger Ansatz 26 des Flansches 20, die Stange 50 umgebend eingreift. Nach der Montage der Zugstange oder der Mehrzahl von Zugstangen, werden die Sacklochbohrungen 25 mit einem Elastomer niedriger Shore-Härte versiegelt, damit ein begrenztes Spiel der Zugstangenköpfe 51, 52 im Gummiflansch 20 bei Lateralbewegungen möglich ist.

## Patentansprüche

1. Schallisolierender Metallbalgkompensator bestehend aus einem gewellten Metallbalg (10), dessen nach außen radial zu einem Ringscheibenteil (12) aufgeweitete Enden ohne metallischen Kontakt mit Befestigungsflanschen (20) verbunden sind, dadurch gekennzeichnet, daß mindestens einer der Befestigungsflansche aus schallabsorbierendem, nichtmetallischem Werkstoff besteht, das am inneren Umfang des Befestigungsflansches (20) der radial gerichtete Ringscheibenteil (12) des Balges einvulkanisiert und an der der Balgmittel zugewandten Seite mit einem nichtmetallischen Ring (30) abgedeckt ist und daß die der Kompensatoren zugewandte Seite des Befestigungsflansches (20) mit einem übergreifenden, hutförmig profilierten Armierungsring (40) aus Stahlblech abgedeckt ist, dessen Innenöffnung (43) die Balgmantelfläche (11) mit Abstand umgibt.

2. Kompensator nach Anspruch 1, dadurch gekennzeichnet, daß der Befestigungsflansch (20) an der äußeren Stirnseite als Dichtungsring (22) ausgebildet ist.

3. Kompensator nach Anspruch 1 und 2, dadurch gekennzeichnet, daß der nichtmetallische Ring (30) L-förmig profiliert ist und auch das benachbarte glattwandige Balgende (11) abdeckt.

4. Kompensator nach Anspruch 2 und 3, dadurch gekennzeichnet, daß der nichtmetallische Ring (30) am Balgende (11, 12) und Befestigungsflansch (20) anvulkanisiert ist.

5. Kompensator nach Anspruch 1 bis 4, dadurch gekennzeichnet, daß die nichtmetallischen Befestigungsflansche (20) mit über den Umfang verteilten Sacklochbohrungen(25) zur Aufnahme der Köpfe (51, 52) von die gegenüberliegenden Flansche (20) verbindenden Zugstangen (50) versehen sind und daß im Bereich der Zugstangen (50) am Stahlblechring (40) im Übermaß gebohrte Öffnungen (45) vorgesehen sind.

6. Kompensator nach Anspruch 1 bis 5, dadurch gekennzeichnet, daß die Befestigungsflansche (20) im Bereich der mit Übermaß gebohrten Öffnungen (45) des Stahlblechringes (40) mit ringförmigen, den Zugstangenquerschnitt freilassenden Ansätzen (26) ausgebildet sind.

7. Kompensator nach Anspruch 1 bis 6, dadurch gekennzeichnet, daß die Sacklochbohrungen (25) mit einem Elastomer (54) niedriger Shore-Härte verschlossen sind.

8. Verfahren zum Herstellen von Kompensatoren nach Anspruch 1 bis 7, dadurch gekennzeichnet, daß auf die zylindrischen Enden eines gewellten Metallrohres (10) Isolierbandagen (30) aus Gummi aufgebracht und darüber metallische Armierungsringe (40) aufgeschoben, daß die überstehenden gummibelegten Rohrteile (10, 30) durch Verdrängungsumformung zu Ringscheibenteilen (12) umgebördelt und mit aus Gummi bestehenden Befestigungsflanschen (20) abgedeckt werden und daß anschließend die Ringscheibenteile (12) in einer Vulkanisierform durch Pressen und Verfließen fest in das ausvulkanisierte Gummi (20, 30) eingebettet werden.

**Claims**

1. A sound-insulating metal bellows expansion joint consisting of a corrugated metal bellows (10) of which the ends widened out radially outwards to form an annular disc portion (12) are connected to attachment flanges (20) without metallic contact, characterised in that at least one of the attachment flanges consists of a sound-absorbing, non-metallic material which, at the inner periphery of the attachment flange (20), is vulcanized into the radially directed annular disc portion (12) of the bellows and is covered, at the side adjacent to the bellows means, by a non-metallic ring (30), and that the side of the attachment flange (20) adjacent to the expansion joint is covered by an overlapping reinforcing ring (40) of steel sheet which is profiled in the shape of a hat and the inner opening (43) of which surrounds the peripheral surface (11) of the bellows with spacing.

2. An expansion joint according to Claim 1, characterised in that the attachment flange (20) is constructed in the form of a sealing ring (22) at the outer end.

3. An expansion joint according to Claims 1 and 2, characterised in that the non-metallic ring (30) is profiled in L-shape and also covers the adjacent smooth-walled end (11) of the bellows.

4. An expansion joint according to Claims 2 and 3, characterised in that the non-metallic ring (30) is vulcanized onto the end (11, 12) of the bellows and onto the attachment flange (20).

5. An expansion joint according to Claims 1 to 4, characterised in that the non-metallic attachment flange (20) is provided with blind bores (25) distributed over the circumference to receive the heads (51, 52) of tie rods (50) connecting the opposite flange (20) and that openings (45) drilled with overdimensioning are provided in the steel sheet ring (40) in the region of the tie rods (50).

6. An expansion joint according to Claims 1 to 5, characterised in that in the region of the openings (45) drilled with overdimensioning in the steel sheet ring (40), the attachment flanges (20) are constructed with annular projections (26) leaving the crossection of the tie rods free.

7. An expansion joint according to Claims 1 to 6, characterised in that the blind bores (25) are closed with an elastomer (54) having a low Shore hardness.

8. A method of producing expansion joints according to Claims 1 to 7, characterised in that fitted over the cylindrical ends of a corrugated metal tube (10) are insulating bands (30) of rubber over which metallic reinforcing rings (40) are pushed, that the projecting rubber-covered tube portions (10, 30) are flanged over by displacement deformation to form annular disc portions (12) and are covered by attachment flanges (20) consisting of rubber and that then the annular disc portions (12) are firmly embedded in the fully vulcanized rubber (20, 30) by pressing and blending in a vulcanizing mould.

## Revendications

1. Compensateur à soufflet métallique pour isolation de bruits, se composant d'un soufflet métallique ondulé (10), dont des extrémités élargies radialement vers l'extérieur jusqu'à une partie en forme de disque annulaire (12) sont reliées sans contact métallique avec des brides de fixation (20), caractérisé en ce qu'au moins une des brides de fixation (20) se compose d'un matériau non métallique, absorbant les bruits, en ce que, sur la périphérie intérieure de la bride de fixation est fixée par vulcanisation la partie en forme de disque annulaire (12), orientée radialement, du soufflet et est recouverte, sur le côté dirigé vers le milieu du soufflet, avec un anneau non-métallique (30), et en ce que le côté de la bride de fixation (20) qui est dirigé vers le milieu du compensateur est recouvert par un anneau de renforcement (40) en tôle d'acier, profilé en forme de chapeau, s'accrochant sur elle et dont l'ouverture intérieure (43) entoure à distance la surface périphérique (11) du soufflet.

2. Compensateur selon la revendication 1, caractérisé en ce que la bride de fixation (20) est agencée sur le côté frontal extérieur comme une bague d'étanchéité (22).

3. Compensateur selon les revendications 1 et 2, caractérisé en ce que l'anneau non- métallique (30) est profilé en forme de L et recouvre également l'extrémité adjacente à paroi lisse (11) du soufflet.

4. Compensateur selon les revendications 2 et 3, caractérisé en ce que l'anneau non-métallique (30) est fixé par vulcanisation à l'extrémité de soufflet (11, 12) et à la bride de fixation (20).

5. Compensateur selon les revendications 1 à 4, caractérisé en ce que les brides de fixation non-métalliques (20) sont pourvues de trous borgnes (25) répartis sur la périphérie en vue de la réception des têtes (51, 52) de tiges de traction (50) reliant les brides mutuellement opposées (20) et en ce qu'il est prévu dans la zone des tiges de traction (50), sur l'anneau en tôle d'acier (40), des trous (45) percés avec une surcote.

6. Compensateur selon les revendications 1 a 5, caractérisé en ce que les brides de fixation (20) sont pourvues, dans une zone des ouvertures (45), percées avec une surcote, de l'anneau (40) en tôle d'acier, d'appendices (26) de forme annulaire, dégageant la section des tiges de traction.

7. Compensateur selon les revendications 1 à 6, caractérisé en ce que les trous borgnes (25) sont obturés avec une matière élastomère (54) de faible dureté Shore.

8. Procédé de fabrication de compensateurs selon les revendications 1 à 7, caractérisé en ce qu'on met en place sur les extrémités cylindriques d'un tube métallique ondulé (10) des bandages isolants (30) en caoutchouc sur lesquels on engage des anneaux métalliques de renforcement (40), en ce que les parties tubulaires dépassantes et revêtues de caoutchouc (10, 30) sont rabattues par un processus de déformation par refoulement sous la forme de parties (12) en forme de disques annulaires et sont recouvertes par des brides de fixation (20) se composant de caoutchouc et en ce qu'ensuite les parties (12) en forme de disques annulaires sont noyées solidement dans le caoutchouc vulcanisé (20, 30 ) dans un moule de vulcanisation produisant une compression et un fluage.

Fig. 1

Fig. 2